(19) Europäisches Patentamt

European Patent Office

Office européen des brevets

(11) **EP 1 055 162 B1**

(12) **EUROPÄISCHE PATENTSCHRIFT**

(45) Veröffentlichungstag und Bekanntmachung des Hinweises auf die Patenterteilung:
**03.07.2002 Patentblatt 2002/27**

(21) Anmeldenummer: **99907321.6**

(22) Anmeldetag: **10.02.1999**

(51) Int Cl.7: **G05B 23/02**

(86) Internationale Anmeldenummer:
**PCT/DE99/00366**

(87) Internationale Veröffentlichungsnummer:
**WO 99/41650 (19.08.1999 Gazette 1999/33)**

(54) **PROZESS- UND ANLAGENDIAGNOSEVERFAHREN**

PROCESS AND INSTALLATION DIAGNOSTIC METHOD

PROCEDE POUR ETABLIR DES DIAGNOSTICS CONCERNANT DES PROCESSUS ET DES INSTALLATIONS

(84) Benannte Vertragsstaaten:
**DE FR GB IT**

(30) Priorität: **10.02.1998 DE 19805061**

(43) Veröffentlichungstag der Anmeldung:
**29.11.2000 Patentblatt 2000/48**

(73) Patentinhaber:
• **Universität Hannover**
**30167 Hannover (DE)**
• **Schröder, Jens-J.**
**31319 Sehnde (DE)**

(72) Erfinder:
• **SCHRÖDER, Jens-J.**
**D-31319 Sehnde (DE)**

• **LINNEMANN, Claus**
**D-30171 Hannover (DE)**
• **ADAMIETZ, Markus**
**D-30826 Garbsen (DE)**

(74) Vertreter: **Patentanwälte Thömen & Körner**
**Zeppelinstrasse 5**
**30175 Hannover (DE)**

(56) Entgegenhaltungen:
| | |
|---|---|
| EP-A- 0 514 104 | US-A- 5 223 207 |
| US-A- 5 305 426 | US-A- 5 459 675 |
| US-A- 5 497 335 | US-A- 5 566 092 |
| US-A- 5 668 741 | |

**Beschreibung**

Die Erfindung betrifft ein Prozeß- und Anlagendiagnoseverfahren nach dem Oberbegriff des Anspruchs 1.

Eine Prozeß- und Anlagendiagnose bei verfahrenstechnischen Prozessen ist Voraussetzung zur Verringerung der spezifischen Emissionen, zum möglichst schonenden Einsatz von Betriebsmitteln, zur Vermeidung von Reparaturen oder gar Ersatzinvestitionen und damit verbundenen Betriebsausfällen, zur optimalen Gestaltung von An- und Abfahrvorgängen sowie zur rechtzeitigen Einleitung von Ertüchtigungsmaßnahmen. Zwar werden u. a. für automatische Regelvorgänge oder für spätere statistische Auswertungen eine Vielzahl von Betriebsmeßgrößen erfaßt, für eine Prozeß- und Anlagendiagnose, die mit Betriebskennwert-Referenzwert-Vergleichen arbeitet, werden aber Referenzwerte benötigt.

Im Normalfall existieren aber keine brauchbaren Referenzwerte. Eventuell vorhandene Abnahmemessungen wurden unter bestimmten Randbedingungen mit einer speziellen Meßtechnik erfaßt, spiegeln oft nicht mehr den aktuellen Anlagenzustand wider und sind damit kaum geeignet. Für einen Vergleich mit Simulationsrechnungen, wie in der DE 31 33 222 C2 beschrieben, ist zunächst ein komplexes Modell zu erstellen, zu adaptieren und zu validieren, was sehr zeit- und kostenaufwendig ist.

Der Erfindung liegt die Aufgabe zugrunde, die für im Rahmen eines Prozeß- und Anlagendiagnoseverfahrens durchzuführenden Betriebskennwert-Referenzwert-Vergleiche benötigten repräsentativen Referenzwerte für die praxisüblichen Betriebszustände automatisch zu generieren.

Diese Aufgabe wird bei einem Prozeß- und Anlagendiagnoseverfahren nach dem Oberbegriff des Anspruchs 1 durch die im Kennzeichen angegebenen Merkmale gelöst. Weiterbildungen und vorteilhafte Ausgestaltungen ergeben sich aus den Unteransprüchen und der nachfolgenden Beschreibung.

Das Prinzip der erfindungsgemäßen Lösung basiert auf einem Vergleich des Prozesses mit sich selbst (Selbstidentifikation). Als Referenz werden Werte herangezogen, die aus einer Untermenge der zuvor während stationärer Betriebsweise aufgezeichneten Betriebszuständen ermittelt werden. Die Gesamtheit dieser Betriebszustände ist eine Sammlung objektiver Betriebserfahrungen und bildet damit - bereinigt von während gestörten Betriebes aufgezeichneten Datensätzen - die Grundlage für eine sinnvolle Betriebsüberwachung. Es wird allerdings eine gewisse endliche Zeit benötigt, bis eine ausreichende Datenmenge verfügbar ist und die Sammlung objektiver Betriebserfahrungen ist streng genommen solange nicht vollständig abgeschlossen, wie die praxisübliche Varianz der externen und sonstigen Parameter noch nicht ausgeschöpft wurde.

Die Betriebsmessungen sind grundsätzlich mit statistischen und systematischen Meßunsicherheiten behaftet. Die statistischen Unsicherheiten lassen sich durch die mehrfache Messung in einem betrachteten Stationaritätsintervall, also in einer zusammenhängenden Zeitspanne, in der ein stationärer Zustand herrschte, ausreichend gut abschätzen. Die systematischen Unsicherheiten werden im allgemeinen nicht durch eine Korrektur bereinigt, da die gesamten Meßketten in der Regel nicht kalibriert werden. Sie verfälschen die wahren Meßwerte also weiterhin. Diese Tatsache ist aber nur von Bedeutung, falls es auf absolut richtige Messungen, z. B. für den Vergleich von verschiedenen Anlagen gleicher Art, ankommt.

Da sowohl die aktuellen Betriebszustände als auch die später aus ihrer Summe hervorgehenden generierten Referenzzustände mit denselben Meßmitteln erfaßt wurden, besitzen sie annähernd die gleiche systematische Fehlweisung und statistische Qualität. Daher kürzen sich die systematischen Unsicherheiten heraus und sind somit ohne Belang. Im übrigen fließen viele der ermittelten Messungen in wichtige Regelungen ein und sind für die Betriebssicherheit und Anlagenlebensdauer unentbehrlich. Es kann also davon ausgegangen werden, daß diese Messungen betriebsseitig ausreichend gut gepflegt werden.

Die Erfindung erlaubt es, selbst mit den eingeschränkten Mitteln von reinen Betriebsmessungen und ohne Modellbildung und Validierung eine Analyse und Bewertung des Prozeß- und/oder Anlagenzustandes durchzuführen, um darauf aufbauend gegebenenfalls gezielte und quantitativ begründbare "therapeutische" Maßnahmen, wie Instandsetzung, Störungsbehebung, Prozeßverbesserung zu ergreifen.

Es handelt sich bei der Erfindung weder um eine Regelung, wozu die Parameter grundsätzlich beeinflußbar sein müßten, noch um eine Onlineproduktqualitätsüberwachung, die mit sehr viel einfacheren automatisierten Mitteln zu erreichen ist. Es handelt sich auch noch nicht um ein Expertensystem, das die "therapeutischen" Maßnahmen selbsttätig ergreift, in das zwangsläufig bereits vorhandenes, individuelles Expertenwissen einfließen muß. Es schafft jedoch eine wesentliche Voraussetzung dafür.

Um aus der Summe aller anfallenden Betriebsmessungen die für die Gesamtdatenbasis geeigneten Betriebskennwerte zu erhalten, wird innerhalb eines vorgegebenen Zeitintervalls aus den momentanen Betriebsmeßwerten ein vorläufiger Meßwert- und Kennwertsatz, bestehend aus Mittelwerten und den dazugehörigen Standardabweichungen angelegt, wobei die Größe der Standardabweichungen ein Maß für die Stationarität darstellt. Bei Einhalten des Stationaritätskriteriums wird der Meß- und Kennwertsatz als Betriebszustand in die Gesamtdatenbasis übernommen, während er bei Verletzen des Stationaritätskriteriums verworfen wird. Diese Maßnahme ermöglicht es, den Stationaritätszustand automatisch nach einheitlichen Kriterien festzustellen und damit selbständig entscheiden zu können, ob der Meßwert- und Kennwertsatz in die Gesamtdatenbasis übernommen wird oder nicht.

Bei der Erfindung werden auf diese Weise ausschließlich auf ihre Stationarität geprüfte Betriebszustände erfaßt, weil die bewußte Vermeidung dynamischer Einflüsse eine wesentliche Voraussetzung für die Schärfe und Vergleichbarkeit von Zuständen ist. Es werden also nur innerhalb eines stationären Zeitintervalls aufgesammelte Meßwerte zur Bildung von Mittelwerten und Standardabweichungen genutzt.

Zur besseren Beurteilung des Prozesses können aus den übernommenen Meßwertsätzen für die als stationär identifizierten Zustände nach vorgegebenen Berechnungsvorschriften Kennwerte ermittelt und diese Kennwerte mit ihren Standardabweichungen als Kennwertsätze gespeichert werden. Kennwerte werden häufig aus mehreren Meßwerten berechnet. Beispiele für Kennwerte sind Wirkungsgrade mit ihren Standardabweichungen etc.

Die Kennwerte der einzelnen Betriebszustände können nach Abhängigkeitskriterien geordnet werden. Eine solche, z. B. hierarchische Ordnung erweist sich als hilfreich, um später Ursachen und Auswirkungen von Störungen miteinander verknüpfen zu können.

Für eine Übernahme von Daten aus der Gesamtdatenbasis in eine Referenzdatenbasis können mehrere Auswahlkriterien aufgestellt werden, die einzeln oder auch in Kombination angewendet werden können.

So kann eine automatische Auswahl der zur Aufnahme in die Referenzdatenbasis geeigneten Meßwerte durch Bool'sche Variable vorgenommen werden, die auf unterscheidbare, von außen beeinflußbare oder erkennbare Ereignisse angewendet werden.

Solche Ereignisse können offensichtliche Störungen sowie einoder abgeschaltete Anlagenteile sein, die zu Betriebsmeßwerten führen, von denen schon vorab feststeht, daß sie für die Referenzdatenbasis ungeeignet sind. Derartige Betriebsmeßwerte gelangen aber noch in die Gesamtdatenbasis, wenn das hierfür relevante Stationaritätskriterium erfüllt ist.

Weiterhin kann eine automatische Auswahl der zur Aufnahme in die Referenzdatenbasis geeigneten Meßwerte zusätzlich oder alternativ durch eine Intervallabgrenzung der Wertebereiche offensichtlich einflußreicher externer und sonstiger Prozeßparameter vorgenommen werden.

Auf diese Weise lassen sich extreme Abweichungen von Kennwerten innerhalb einzelner Betriebszustände von einer normalen Varianz innerhalb zu überwachender Betriebszustände ausschließen, so daß Extremzustände nicht in die Referenzdatenbasis gelangen. Die Referenzdatenbasis erhält somit nur positiv bewertete Kennwerte, die für einen Vergleich geeignet sind.

Zur Schaffung einer Referenzdatenbasis kann so vorgegangen werden, daß auf der Basis einer hinreichend großen Anzahl von Betriebszuständen eine vorläufige Referenzdatenbasis erstellt wird. Aufgrund ihrer Daten lassen sich diejenigen unabhängigen Parameter ermitteln, die einen Einfluß auf Kennwerte haben. Werden im weiteren Verlauf mehr Betriebszustände erfaßt, kann der Vorgang wiederholt werden, um die Referenzdatenbasis zu erweitern und um sie auf größere Parameterbereiche auszudehnen.

Im nächsten Schritt können aus der vorläufigen Referenzdatenbasis mittels mathematischer Berechnungsverfahren Kennwerte und ganze Betriebszustände mit auffälligen Abweichungen entfernt werden, bis eine Konvergenz der verbleibenden Kennwerte erzielt wird. Aus den verbleibenden Kennwerten können dann eine für die Verwendung zur Prozeß- und Anlagendiagnose gültige Referenzdatenbasis und daraus berechnete Referenzwertfunktionen erzeugt werden.

Diese Referenzwertfunktionen beschreiben mit bestmöglicher Präzision die Abhängigkeit der Kennwerte von wichtigen Parametern (Selbstidentifikation). Aus diesen Referenzwertfunktionen kann ein Referenzzustand sicher berechnet werden, solange die Parameter innerhalb des erfaßten Parameterbereichs liegen. Dieser Bereich erweitert sich selbsttätig mit den Anforderungen, so daß eine praxisrelevante Parametervariation gesichert wird.

In diesem Fall wird als mathematisches Berechnungsverfahren zur Ermittlung der Referenzwertfunktionen und zur Identifikation von auffälligen Abweichungen die multiple lineare Regressionsanalyse eingesetzt, aber auch eine Erweiterung mit nichtlinearen Ansätzen oder der Einsatz anderer Methoden wie z. B. Fuzzy Logik oder neuronaler Netze ist denkbar. Hierdurch gelingt es, Referenzwerte auch für solche Betriebszustände zu ermitteln, die in der Vergangenheit noch nicht vorgekommen sind.

Die durch Regression erhaltenen Referenzwertfunktionen umfassen in den einfachsten Fällen die Mittelwertbildung oder die einfache lineare Gleichung, für komplexere Kennwerte aber auch Gleichungen höherer Ordnung in Abhängigkeit verschiedener Parameter. Geeignete Parameter (Regressoren) können für jeden Kennwert aus der vorläufigen Referenzdatenbasis mittels Korrelationsanalyse ermittelt werden. Dabei wird davon ausgegangen, daß bei Vorhandensein von mehreren solcher Parameter diese untereinander linear unabhängig sind. Die Beurteilung der Güte der Regression kann zwar leicht anschaulich durch grafische Darstellung durchgeführt werden, formal wird jedoch das Bestimmtheitsmaß der Regression sowie die Standardabweichungen der Koeffizienten bestimmt, um eine automatische Ermittlung nach einheitlichen Kriterien zu ermöglichen.

Zusätzlich kann die zunächst lineare Regressionsanalyse erweitert werden, indem sie durch Hinzunahme eines quadratischen Terms bezüglich eines oder mehrerer Parameter auf eine mögliche Verbesserung der durch sie beschreibbaren Zusammenhänge geprüft wird. Im Falle einer Verbesserung kann das lineare Regressionsmodell durch den quadratischen Term erweitert werden.

Damit läßt sich eine noch bessere Anpassung der Referenzwertfunktion an betriebsspezifische Einflüsse vornehmen. Die generierten Referenzwerte werden so verläßlicher. Eine Referenzwertfunktion zweiter Ordnung bildet gleichzeitig einen Kompromiß zwischen möglicher Genauigkeit und dem Ausschluß physikalisch unsinniger Abhängigkeiten, wie sie bei Funktionen noch höherer Ordnung in Form von Wendepunkten auftreten könnten.

Durch einen Vergleich der Originalwerte mit den Werten, die mit den über die Regression gewonnenen Referenzwertfunktionen berechnet werden, können unter Berücksichtigung der statistischen Güte auch nachträglich noch einzelne Kennwerte und ganze Betriebszustände als gestört erkannt und aus der Referenzdatenbasis eliminiert werden. Durch iteratives Vorgehen wird dieses wiederholt, bis eine Konvergenz erreicht ist.

Hierdurch ist nochmals eine geringfügige Korrektur der Koeffizienten der Referenzwertfunktionen und dadurch eine weitere Erhöhung der Genauigkeit der generierten Referenzwerte möglich.

Zweckmäßig wird die gültige Referenzdatenbasis in Abständen durch neue, fortlaufend ermittelte Betriebsmeßwerte aktualisiert und an Prozeß- und Anlagenzustände angepaßt. Dadurch wird die Referenzdatenbasis auch um solche gemessenen Werte erweitert, die anfangs nur durch mathematische Methoden berechnet oder geschätzt werden konnten. Mit Hilfe dieser zusätzlichen Werte lassen sich die Referenzwertfunktionen bestätigen, korrigieren oder verwerfen, und so die Verläßlichkeit und die Genauigkeit des Systems steigern. Es handelt sich hauptsächlich um praxisrelevante Betriebszustände, während Werte für unübliche Betriebszustände selten oder nicht verifiziert werden. Da letztere Betriebszustände aber nur selten oder nicht auftreten, sind exakte Referenzwerte hierfür nicht nötig. Die Genauigkeit durch mathematische Berechnungsverfahren ist vielmehr ausreichend und der geringen Bedeutung solcher Betriebszustände auch angemessen.

Nach Erzeugung einer gültigen Referenzdatenbasis können die Werte weiterer Betriebszustände unmittelbar mit den für deren Parameterkonstellationen berechneten Referenzzuständen verglichen werden.

Dieser Vergleich kommt ohne Korrektur von systematischen Meßunsicherheiten und/oder ohne physikalisch/mathematische Modellierung des Prozesses und/oder ohne Meßdatenvalidierung aus.

Vorzugsweise wird bei Betriebskennwert-Referenzwert-Vergleichen eine Abweichung eines aktuellen Betriebskennwertes vom Referenzwert auf die mittlere Standardabweichung des Referenzwertes im störungsfreien Betrieb bezogen. Die so erhaltene dimensionslose, parameterbereinigte statistisch bewertete Abweichung vom störungsfreien Betrieb wird dann als Bewertungsziffer ausgegeben. Die Ausgabe kann durch Anzeigen und/oder Ausdrucken und/oder Speichern erfolgen.

Diese Maßnahme trägt wesentlich dazu bei, Abweichungen der verschiedenen Kennwerte auch untereinander vergleichbar zu machen. Sie beseitigt insbesondere den Einfluß der externen und sonstigen Parameter des Prozesses. Dadurch lassen sich Betriebsstörungen schnell erkennen und die Ursache leichter bestimmten Anlagenteilen zuordnen.

Eine vorteilhafte Weiterbildung sieht vor, daß die Kennwerte hierarchisch geordnet werden und ein Zustandsprotokoll ausgegeben wird, das für jeden Kennwert den aktuellen Betriebskennwert, den Referenzwert und die zugehörige Bewertungsziffer enthält.

Diese Ordnung ermöglicht eine übersichtliche Darstellung der Kennwerte und erleichtert eine schnelle Eingrenzung möglicher Ursachen bei Betriebsstörungen.

Ergänzend können Bewertungsziffern oberhalb einer vorgegebenen Grenze mit einer Kennzeichnung versehen werden. Diese dienen innerhalb der hierarchischen Struktur zur quantitativen Suche nach den Ursachen bzw. den Auswirkungen von Prozeßund Anlagenstörungen.

Nachfolgend wird die Erfindung am Beispiel der Prozeß- und Anlagendiagnose eines Steinkohlekraftwerks anhand von grafischen Darstellungen näher erläutert. Darin zeigen:

Fig. 1 eine Hierarchiepyramide der Betriebskennwerte,

Fig. 2 ein Flußdiagramm zur Erzeugung der objektiven Betriebserfahrung, zur Erzeugung von Referenzwerten und zur Durchführung von Betriebskennwert-Referenzwert-Vergleichen,

Fig. 3 ein Flußdiagramm zur Erzeugung von Referenzfunktionen,

Fig. 4 eine Diagrammdarstellung eines Datensatzes aus mehreren Betriebskennwerten,

Fig. 5 eine Diagrammdarstellung des Ergebnisses einer linearen Regression,

Fig. 6 eine Diagrammdarstellung des Ergebnisses einer multiplen linearen Regression,

Fig. 7 eine Diagrammdarstellung des Ergebnisses der um gestörte Betriebskennwerte bereinigten multiplen linearen Regression aus Fig. 6 und

Fig. 8 eine grafische Darstellung der Verteilung der Abweichungen eines Betriebskennwertes vom Referenzwert und Zuordnung der Bewertungsziffer.

Fig. 9    ein Protokoll von Meß- und Kennwerten am Beispiel eines Störfalles.

Das erfindungsgemäße Prozeß- und Anlagendiagnoseverfahren wurde am Beispiel eines Steinkohlekraftwerkes entwickelt und in die Leittechnik dieses Kraftwerkes integriert. Hierbei werden laufend Prozeßgrößen auf verschiedenen Verdichtungsebenen von wichtigen Einzelmeßwerten bis zur zentralen Größe des Blockwirkungsgrades beobachtet und ausgewertet.

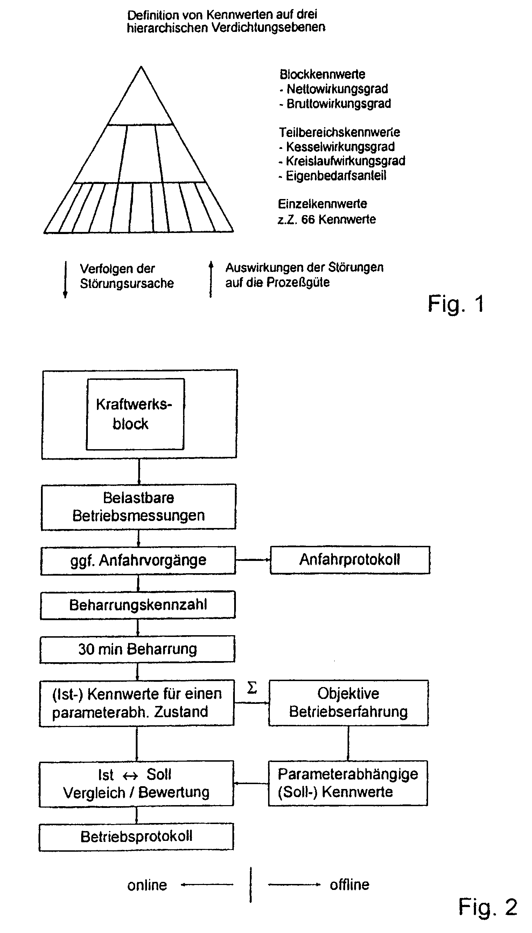

Fig. 1 zeigt eine Hierarchiepyramide der Betriebskennwerte in drei verschiedenen Verdichtungsebenen. Die untere Ebene umfaßt Einzelkennwerte, wie z. B. Sauerstoffgehalt, Abgastemperatur, sowie zahlreiche an den Anlagenteilen ermittelte Betriebskennwerte.

In der mittleren Ebene sind Teilbereichskennwerte zusammengefaßt, die bereits jeweils die Parameterabhängigkeit der Kennwerte der unteren Ebene enthalten. Zu nennen sind hier z. B. der Kesselwirkungsgrad, der Kreislaufwirkungsgrad und der Eigenbedarfsanteil.

In der oberen Ebene sind Blockkennwerte zusammengefaßt, die jeweils die Parameterabhängigkeit der Teilbereichskennwerte der mittleren Ebene enthalten. Beispiele sind der Nettowirkungsgrad und der Bruttowirkungsgrad.

An der dargestellten Pyramide, die auch das Vorbild für die Anordnung der Betriebskennwerte, Referenzwerte und Abweichungen auf einer Anzeige im Leitstand sowie der Protokolldarstellung bildet, können die Auswirkungen von Störungen auf die Prozeßwerte sichtbar gemacht werden und daraufhin die Störungsursache verfolgt werden.

Fig. 2 zeigt im rechten Pfad das Flußdiagramm zur Erzeugung von Referenzwerten. Dazu werden im Kraftwerksblock ständig durchgeführte belastbare Betriebsmessungen aufgenommen. Diese bilden die Grundlage für die Ermittlung von aktuellen Kennwerten und Referenzwerten in den verschiedenen Verdichtungsebenen nach Fig. 1.

Betriebsmessungen sind als 15-Sekundenmittelwerte online auf einem Datenbus des Kraftwerks für das Prozeß- und Anlagendiagnoseverfahren verfügbar. Damit diese Meßwerte zwischengespeichert werden, muß ein stationärer Betriebszustand herrschen, der als Blockstationarität bezeichnet wird. Da das System automatisch arbeiten soll, muß es auch in der Lage sein, diese Blockstationarität online zu erkennen. Dazu wurde eine Kennzahl definiert, deren Größe ein Maß für die Stationarität darstellt. Im stationären Betrieb nimmt diese Kennzahl einen Wert in der Größenordnung von eins, im instationären Betrieb deutlich größere Werte von bis zu über 100 an. Aufgrund der gewonnenen betrieblichen Erfahrungen liegt definitionsgemäß Stationarität vor, wenn diese Kennzahl einen Wert kleiner oder gleich 1,5 aufweist.

Nachdem der Beginn der Stationarität festgestellt wurde, werden 15-sekündlich die Meßwerte vom Datenbus ausgelesen, die Kennwerte gebildet und temporär zwischengespeichert. Nach einem 30-minütigen Stationaritätsintervall werden die gesamten Daten statistisch ausgewertet und in Ergebnisdateien abgelegt. Falls das Stationaritätskriterium vorher verletzt wird, wird die Datenaufnahme beendet und der temporäre Datensatz verworfen. Als kleinste Einheit stehen somit für ein geprüftes stationäres Halbstundenintervall ein Meßwert- und ein Kennwertsatz, bestehend aus Mittelwerten und den dazugehörigen Standardabweichungen, zur Verfügung, die einen Betriebszustand des Blockes

Die Gesamtheit der aufgenommenen halbstündigen stationären Betriebszustände stellt somit eine Sammlung objektiver Betriebserfahrungen dar, die die Grundlage für eine sinnvolle Betriebsüberwachung liefert. Die unabhängigen Hauptparameter einer Meßreihe bewegten sich dabei in folgenden

| Heizwert (Kohle) | 24,0 bis 29,2 | MJ/kg |
|---|---|---|
| Außenlufttemperatur | -20,4 bis 27,6 | °C |
| Kühlwassertemperatur | 8,1 bis 28,9 | °C |
| Bruttoleistung | 830 bis 900 | MW |

Um den störungsfreien Betrieb effizient zu beschreiben, muß aus der Gesamtdatenbasis als objektiver Betriebserfahrung eine als Referenzdatenbasis geeignete Untermenge selektiert werden.

Die Referenzdatenbasis liefert nun die Referenzwertfunktionen und Referenzwerte, die mit den aktuellen Betriebskennwerten verglichen werden. Die Ergebnisse der Vergleiche werden außerdem bewertet, so daß auch die Auswirkungen der Abweichungen besser beurteilt werden können. Anschließend werden die aktuellen Betriebskennwerte, Referenzwerte und bewerteten Vergleiche dargestellt und protokolliert.

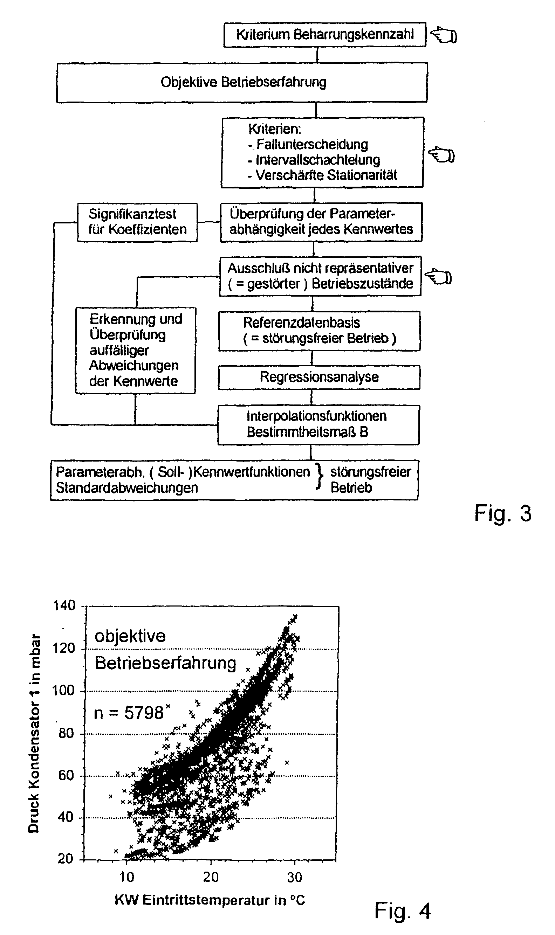

Fig. 3 zeigt ein Flußdiagramm zur Erzeugung von Referenzfunktionen. Es handelt sich hier um eine erweiterte Darstellung des in Fig. 2 gezeigten Schrittes von der objektiven Betriebserfahrung zu den parameterabhängigen Referenzwertfunktionen.

Eine Maßnahme zur Selektion der vorläufigen Referenzdatenbasis bildet eine Fallunterscheidung. Eine eindeutige Auswahl kann getroffen werden, wenn von außen beeinflußbare oder erkennbare alternative Zustände durch Boolesche Variablen, also Ja/Nein Entscheidungen, unterschieden werden können. Beispiele sind ein offensichtlicher Störfall oder der Einschaltzustand von Anlagenteilen wie Kohlemühlen oder Elektro-Speisepumpen.

Eine weitere Maßnahme zur Selektion der Betriebszustände für die Referenzdatenbasis bildet eine Intervallabgrenzung für Kennwerte. Vor allem für die wichtigen Parameter werden untere und obere Grenzwerte abgesteckt, um nur den Bereich des normalen Betriebs mit der Referenzdatenbasis wiederzugeben. Als Beispiel im konkreten Anwendungsfall ist die Beschränkung auf eine Bruttoleistung von mindestens 830 MW (wirtschaftlich relevanter Vollastbereich) und das Abstecken eines dafür sinnvollen Bereichs des Kühlwassermassenstroms zu nennen.

Schließlich bietet auch ein verschärftes Stationaritätskriterium die Möglichkeit, die Qualität der Referenzdaten weiter zu verbessern. Die Reihenfolge der Selektionsschritte hat dabei keinen Einfluß auf die Größe der entstandenen Untermenge.

Die so gewonnene vorläufige Referenzdatenbasis dient nun als Ausgangspunkt für die Ermittlung von Referenzwertfunktionen für die Kennwerte. Bei der allererersten Ermittlung dient sie auch zum Auffinden der Parameter, die einen entscheidenden Einfluß auf die Kennwerte haben. Dazu werden Hypothesen über ihren Einfluß auf Kennwerte aufgestellt und mittels Korrelationsanalyse geprüft. Sind die prinzipiellen Abhängigkeiten eines Kennwertes $y_i$ von den Parametern $x_i$, welche z. B. Außenlufttemperatur, Kühlwassertemperatur und Feuerungswärmeleistung sein können, ermittelt, kann über eine multiple lineare Regression nach dem Ansatz

$$\hat{y} = a_0 + \Sigma a_i {}^* x_i$$

eine Referenzwertfunktion $\hat{y}_i = f(x_i)$ gefunden werden.

Der einfachste konkrete Ansatz ist die Mittelwertbildung $\hat{y} = a_0$ für Kennwerte, die im störungsfreien Vollastbetrieb konstant sind, z. B. der Kennwert "Frischdampftemperatur". Die Regression liefert aus den einzelnen diskreten Betriebskennwerten eine Referenzwertfunktion, mit der sich auch Zwischenwerte zwischen den diskreten Meßwerten ermitteln lassen.

Um die Genauigkeit und Darstellungsfähigkeit weiter zu verbessern, kann für die Referenzwertfunktionen - zumindest bei einem Teil der Parameter - ein quadratischer Term hinzugenommen werden, so daß der allgemeine Ansatz dann lautet:

$$\hat{y} = a_0 + \Sigma a_i {}^* x_i + \Sigma b_i {}^* x_i^2.$$

Ist die Verbesserung der Referenzwertfunktion statistisch abgesichert, wird das lineare Regressionsmodell entsprechend erweitert.

Eine weitere Verbesserung wird anschließend durch Iteration erreicht. Innerhalb einer Iterationsschleife wird eine Erkennung und Überprüfung auffälliger Abweichungen der Kennwerte vorgenommen. Durch Beschränkung der zulässigen Abweichung einzelner Kennwerte der Referenzdatenmenge von der zugehörigen ersten Referenzwertfunktion mit Hilfe ihrer Standardabweichung werden nachträglich einige Prozeßzustände der Referenzdatenbasis als gestört erkannt. Diese werden vor einer erneuten Iterationsschleife aus der Datenmenge eliminiert, bis Konvergenz erzielt ist und die endgültige Referenzdatenbasis feststeht.

Die Gesamtheit der beschriebenen Maßnahmen bewirkt, daß eine Überschreitung vorgegebener Grenzen eines Kennwertes an irgendeiner Stelle des Wertezusammenhangs zu einem Ausschluß des Wertes und/oder des gesamten Betriebszustandes aus der Referenzdatenbasis führt. Das Ergebnis einer solchen Prozedur sind dann die zu der endgültigen, aktuellen Referenzdatenbasis gültigen Referenzwertfunktionen und deren Standardabweichungen.

Die anhand der Fig. 3 beschriebenen Maßnahmen werden nachfolgend als Ausführungsbeispiel für die Referenzwertfunktionsbestimmung "Kondensatordruck" in einer Folge von grafischen Darstellungen aufgezeigt. Das Kohlekraftwerk ist mit zwei in Reihe geschalteten Kondensatoren ausgestattet, von denen zunächst Kondensator 2 vom Kühlwasser durchströmt wird. Kondensator 1 befindet sich dadurch auf einem höheren Temperaturniveau. Unter Kühlwassertemperatur $T_{KW}$ ist jedoch stets die Eintrittstemperatur in Kondensator 2 zu verstehen, da nur diese die Anforderungen an einen unabhängigen Parameter hinreichend erfüllt.

Es ist zu erwarten, daß die Kühlwassertemperatur einen Einfluß auf die Kondensationstemperatur und damit auf den Kondensationsdruck $P_{KI}$ hat. Deswegen sind in Fig. 4 bereits alle zum Berechnungszeitpunkt verfügbaren Druckwerte der Betriebskennwertbasis über der zugehörigen Kühlwassertemperatur aufgetragen. Alle stationären Lastpunkte sind verwendet worden. Im folgenden wurde nur der Vollastbetrieb, definiert als das Intervall Leistung $P_{min} < P_{brutto} < P_{max}$ (Intervallabgrenzung), untersucht. Diese Zustände entsprechen der dichten Punktanhäufung im oberen Teil von Fig. 4.

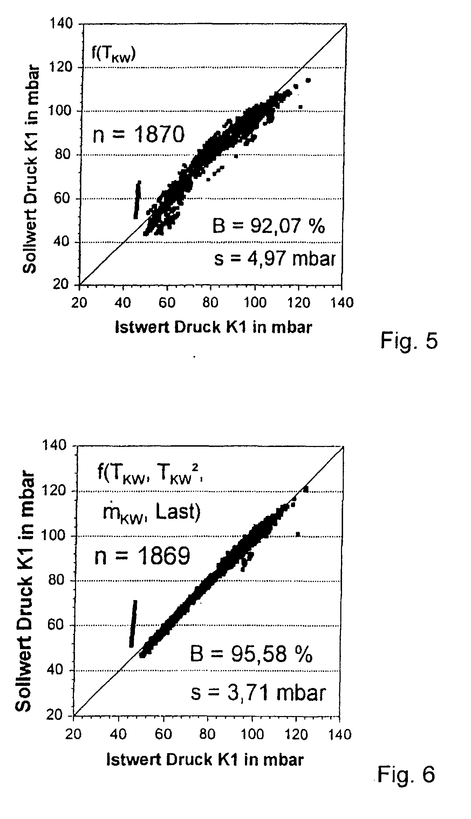

Eine lineare Regressionsanalyse aller betrachteten Druckwerte aus diesem Intervall mit dem zunächst einzigen Parameter $T_{KW}$ und eine Auftragung von über die Regression bestimmten Werten über die Meßwerte in Fig. 5 bestätigt erwartungsgemäß, daß eine deutliche Abhängigkeit vorhanden ist. Dabei wurde die Datenmenge durch Fallunterscheidung, Intervallabgrenzung und verschärftes Stationaritätskriterium zunächst gefiltert, wodurch sich die Anzahl von 4277 auf 1870 Meßpunkte reduzierte.

Erweitert man die Analyse um die Parameter $T_{KW}^2$, Kühlwassermassenstrom und Lastverhältnis, ergibt sich die Darstellung in Fig. 6. Die Standardabweichung s der Regression hat sich verringert und ihr Bestimmtheitsmaß B ist angestiegen. Ein t-Test bestätigt die Signifikanz aller verwendeten Parameter. Ein Datenpunkt der zuvor untersuchten Menge mußte ausgeschlossen werden, da bei ihm der Parameter "Lastverhältnis" gestört war und somit nicht zur Verfügung stand.

Es fallen noch einige Punkte merklich aus dem Rahmen, vor allem jene für Drücke $P_{KI} < 48$ mbar. Hier mußte nachträglich festgestellt werden, daß die Meßstelle für diesen Wert im Kraftwerk zeitweise ebenfalls gestört war. Solche Fehlmessungen wären, bei Vorhandensein dieses Prozeß- und Anlagediagnoseverfahrens von Anfang an, schon vorher angezeigt worden.

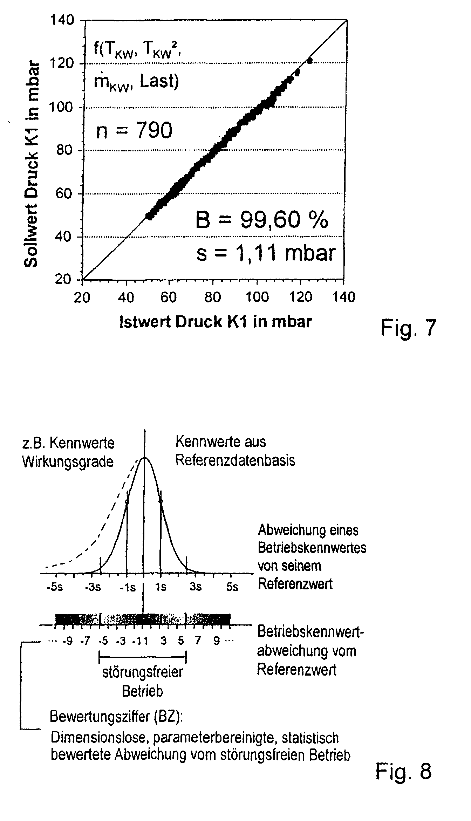

Diese Werte wurden ebenso wie jene anderen, die auch durch Ausreißertests auffielen, mit ihrem gesamten Wertezusammenhang aus der Referenzdatenbasis eliminiert. Gleiches erfuhren automatisch Datensätze, bei denen andere Prozeßwerte gravierende Abweichungen aufwiesen. Mit der verbleibenden Anzahl von Referenzdaten wird eine neue Analyse durchgeführt, und es ergibt sich eine Regression, deren Ergebnis in Fig. 7 dargestellt ist. Hier ist die Diagonale durch immer noch 790 Referenzdatensätze sicher repräsentiert, die Zielfunktion $y = y$ (Wert der Referenzwertfunktion = Betriebskennwert) für eine hundertprozentige Beschreibung ist fast perfekt erreicht.

Für die Bewertung eines Betriebszustandes benötigt man grundsätzlich einen Bezugszustand, der auf der Grundlage einer objektiven Betriebserfahrung den störungsfreien Betrieb des Kraftwerksblockes widerspiegelt. Dieser parameterabhängige Bezugszustand ist in Form der parameterabhängigen Referenzwertfunktionen gegeben und beinhaltet die Einflüsse der wesentlichen externen und sonstigen Parameter. Der Vergleich der Betriebskennwerte mit den Referenzwerten zielt auf eine Sichtbarmachung von Veränderungen, wie Störungen oder nichtoptimale Betriebsweise in der Anlage ab, die in der Regel eine Verschlechterung der Prozeßgüte zur Folge haben. Dabei wird angenommen, daß die Abweichungen der Kennwerte von ihren Referenzwerten absolute Gültigkeit besitzen und mit einer nicht vermeidbaren, aber annähernd konstanten statistischen Unsicherheit behaftet sind.

Die Wiedergabegüte der Referenzwerte im störungsfreien Betrieb ist mit der mittleren Standardabweichung bekannt. Bezieht man die Abweichung eines aktuellen Betriebskennwertes von seinem Referenzwert auf diese Größe, so erhält man eine dimensionslose, parameterbereinigte, statistisch bewertete Abweichung vom störungsfreien Betrieb, die sogenannte Bewertungsziffer BZ. Sie macht die Abweichungen der Meß- und Kennwerte auch untereinander vergleichbar und beseitigt insbesondere den Einfluß der externen und sonstigen Parameter des Kraftwerksprozesses. Die Bewertungsziffern ermöglichen es auf einfache Art und Weise, Betriebsstörungen zu erkennen und, mit Hilfe des hierarchischen Aufbaus der Kennwertpyramide, einem Teilbereich und bestimmten Einzelkennwerten zuzuordnen. Sie gestattet umgekehrt auch, die Konsequenz der Änderung bestimmter Einzelkennwerte auf Kennwerte einer höheren hierarchischen Ebene quantitativ zu erkennen.

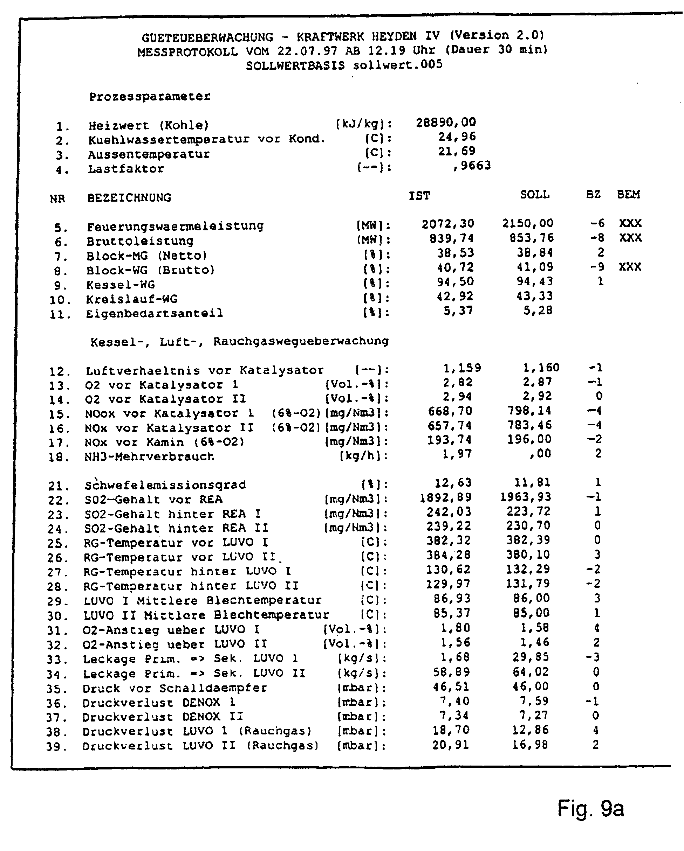

Fig. 8 zeigt hierzu eine grafische Darstellung der Verteilung der Abweichungen eines Betriebskennwertes von seinem Referenzwert als Standardabweichung s und die entsprechende Zuordnung von Bewertungsziffern BZ zu diesen Abweichungen. Gleichzeitig ist der Bereich von Abweichungen eingetragen, in dem noch ein störungsfreier Betrieb vorliegt. Durch die Einführung von einheitlichen Bewertungskriterien ist der Bereich der Bewertungsziffern BZ für einen störungsfreien Betrieb bei allen Kennwerten gleich.

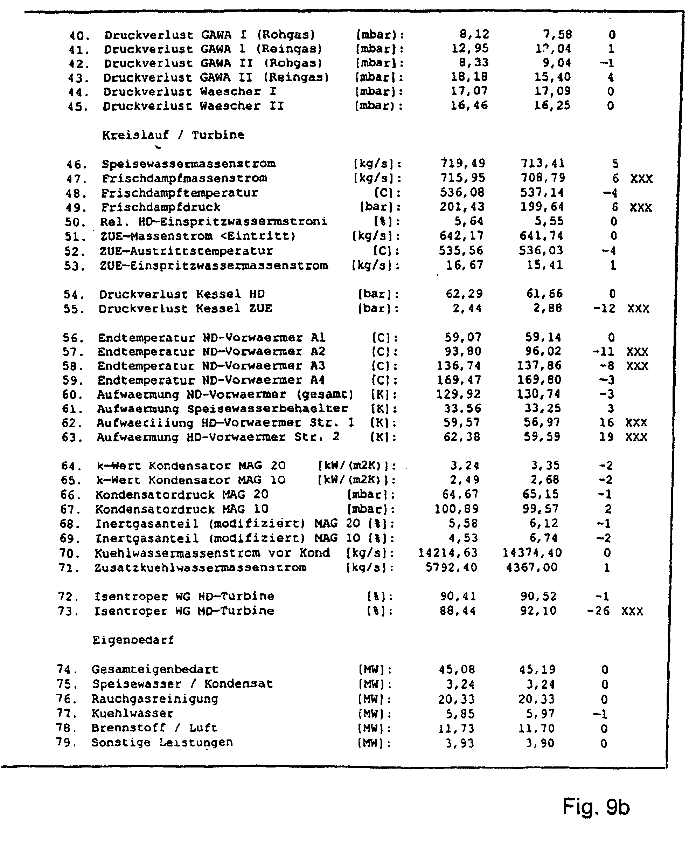

Für die Beurteilung des momentanen Zustandes des als Beispiel gewählten Kraftwerks mittels der "Güteüberwachung" wird ein Protokoll erstellt, das auf einer DIN A4 Seite aktuelle Betriebskenn- und Referenzwerte gegenüberstellt und am Beispiel eines Störfalles in Fig. 9 dargestellt ist. Bei merklichen Abweichungen des Betrages der Bewertungsziffer BZ > 5 wird der jeweilige Kennwert in der Spalte Bemerkung, "BEM", hervorgehoben.

## Patentansprüche

1. Prozeß- und Anlagendiagnoseverfahren bei dem der aktuelle Betriebszustand eines verfahrenstechnischen Prozesses fortlaufend anhand von Betriebskennwerten ermittelt wird und in Betriebskennwert-Referenzwert-Vergleichen mit Referenzwerten verglichen wird, **dadurch gekennzeichnet, daß** bei stationären Betriebszuständen aus reinen Betriebsmeßwerten ermittelte Betriebskennwerte in eine fortlaufend ergänzte Gesamtdatenbasis einfließen und aus dieser Gesamtdatenbasis nach Vorgabe von Auswahlkriterien automatisch eine Referenzdatenbasis als Untermenge der Gesamtdatenbasis selektiert wird und der Referenzdatenbasis entnommene Referenzwerte als Vergleich mit aktuellen Betriebskennwerten herangezogen werden.

2. Prozeß- und Anlagendiagnoseverfahren nach Anspruch 1, **dadurch gekennzeichnet, daß** die Betriebskennwerte sowie die Ergebnisse der Betriebskennwert-Referenzwert-Vergleiche gespeichert und/oder angezeigt werden.

3. Prozeß- und Anlagendiagnoseverfahren nach Anspruch 1 oder 2, **dadurch gekennzeichnet, daß** innerhalb eines vorgegebenen Zeitintervalls aus gewonnenen Momentanmeßwerten ein vorläufiger Datensatz als Vorstufe zu einem Kennwertsatz, bestehend aus Mittelwerten und den dazugehörigen Standardabweichungen angelegt wird, wobei die gewichtete Größe einiger Standardabweichungen zusammengenommen ein Maß für die Stationarität darstellt, und daß bei Einhalten eines vorgegebenen Stationaritätskriteriums der Datensatz endgültig als ein den aktuellen Betriebszustand abbildender Kennwertsatz in die Gesamtdatenbasis übernommen wird, während bei Verletzen des Stationaritätskriteriums der vorläufige Datensatz verworfen wird.

**4.** Prozeß- und Anlagendiagnoseverfahren nach Anspruch 3, **dadurch gekennzeichnet, daß** die Kennwerte der einzelnen Kennwertsätze nach Abhängigkeitskriterien, insbesondere hierarchisch, geordnet werden.

**5.** Prozeß- und Anlagendiagnoseverfahren nach einem der Ansprüche 1 bis 4, **dadurch gekennzeichnet, daß** aus der Gesamtdatenbasis durch Bool'sche Variable und/oder Intervallabgrenzungen jene Zustände ausgeschlossen werden, die nicht gewünschte oder nicht relevante Betriebszustände darstellen, und daß die die verbleibenden Betriebszustände abbildenden Datensätze eine vorläufige Referenzdatenbasis bilden.

**6.** Prozeß- und Anlagendiagnoseverfahren nach Anspruch 5, **dadurch gekennzeichnet, daß** auf der Grundlage der vorläufigen Referenzdatenbasis für jeden Kennwert eines Datensatzes eine quantitativ bewertete Abhängigkeitsermittlung oder -bestätigung von jenen Kennwerten vorgenommen wird, die unabhängige Parameter darstellen.

**7.** Prozeß- und Anlagendiagnoseverfahren nach Anspruch 5 oder 6, **dadurch gekennzeichnet, daß** die Kennwerte der vorläufigen Referenzdatenbasis mittels eines mathematischen Berechnungsverfahren, insbesondere einer multiplen Regression oder Erweiterung oder Verallgemeinerung derselben, wie Fuzzy Logik oder Neuronale Netze, als Funktion einflußreicher, unabhängiger Parameter dargestellt werden, wodurch für jeden Kennwert zunächst vorläufige Referenzwertfunktionen mit zunächst niedrigem Bestimmungsmaß entstehen.

**8.** Prozeß- und Anlagendiagnoseverfahren nach Anspruch 7, **dadurch gekennzeichnet, daß** durch iteratives Vorgehen bei der Bestimmung der Referenzwertfunktionen auffällige Abweichungen erkannt und die entsprechenden Datensätze entfernt werden, bis Konvergenz erreicht ist.

**9.** Prozeß- und Anlagendiagnoseverfahren nach Anspruch 8, **dadurch gekennzeichnet, daß** bei zusätzlich verfügbaren Datensätzen das Bestimmtheitsmaß der Referenzwertfunktionen auch durch Verschärfung des Stationaritätskriteriums fortlaufend bis zur Konvergenz mit aktuell ermittelten Meßwerten erhöht wird.

**10.** Prozeß- und Anlagendiagnoseverfahren nach einem der Ansprüche 3 bis 9, **dadurch gekennzeichnet, daß** der durch mathematische Berechnungsverfahren ergänzte Parameterbereich für als gültig übernommene Referenzfunktionen erweitert wird, indem die Gesamtdatenbasis durch aktuelle Meßwerte für praxisrelevante Betriebszustände erweitert wird.

**11.** Prozeß- und Anlagendiagnoseverfahren nach Anspruch 10, **dadurch gekennzeichnet, daß** der Referenzwert-Betriebskennwert-Vergleich für jeden aktuellen Betriebskennwert ohne Korrektur von systematischen Meßunsicherheiten durchgeführt wird und mit dem zugehörigen parameterbereinigten und statistisch bewerteten Referenzwert eine absolute Abweichung zusammen mit einer statistischen Schwankungsbreite liefert.

**12.** Prozeß- und Anlagendiagnoseverfahren nach Anspruch 11, **dadurch gekennzeichnet, daß** die Abweichung des Betriebskennwertes vom Referenzwert zusammen mit der statistischen Schwankungsbreite als dimensionslose, parameterbereinigte statistisch bewertete Abweichung vom störungsfreien Betrieb als Bewertungsziffer ausgegeben, insbesondere angezeigt und/oder ausgedruckt und/oder gespeichert wird.

**13.** Prozeß- und Anlagendiagnoseverfahren nach Anspruch 12, **dadurch gekennzeichnet, daß** über die Ergebnisse des Vergleichs ein Zustandsprotokoll der hierarchisch geordneten Kennwerte erstellt wird, das für jeden Kennwert den Betriebswert, den Referenzwert und die zugehörige Bewertungsziffer enthält.

**14.** Prozeß- und Anlagendiagnoseverfahren nach Anspruch 12 oder 13, **dadurch gekennzeichnet, daß** Bewertungsziffern oberhalb einer vorgegebenen Grenze eine Kennzeichnung erhalten, die innerhalb der hierarchischen Struktur im Sinne einer fundierten Diagnose zur quantitativen Suche nach den Ursachen bzw. den Auswirkungen von Prozeß- und Anlagenstörungen dient.

**Claims**

**1.** Process and system diagnostic method in which the actual operating condition of an industrial process is continuously established on the basis of operating characteristic values and compared with reference values in operating characteristic value-reference value comparisons,
**characterised in that** operating characteristic values which are established in steady-state operating conditions from pure operating measured values flow into a continuously supplemented total database, and a reference database is automatically selected as a subset of the total database from this total database after predetermining selection criteria, and reference values taken from the reference database are used as a comparison with actual operating characteristic values.

**2.** Process and system diagnostic method according to Claim 1,
**characterised in that** the operating characteristic values and the results of the operating characteristic value-reference value comparisons are stored and/or displayed.

**3.** Process and system diagnostic method according to Claim 1,
**characterised in that** a provisional data set is created within a predetermined time interval from acquired instantaneous measured values as a prestage to a characteristic value set, consisting of mean values and the associated standard deviations, wherein the weighted magnitude of several standard deviations together represents a measure of the steady state, and that, while observing a predetermined steady-state criterion, the data set is finally accepted into the total database as a characteristic value set which reproduces the actual operating condition, while the provisional data set is rejected if the steady-state criterion is contravened.

**4.** Process and system diagnostic method according to Claim 3,
**characterised in that** the characteristic values of the individual characteristic value sets are arranged according to dependence criteria, in particular hierarchically.

**5.** Process and system diagnostic method according to any one of Claims 1 to 4,
**characterised in that** the conditions which represent undesirable or irrelevant operating conditions are excluded from the total database by a boolean variable and/or interval delimitations, and that the data sets reproducing the remaining operating conditions form a provisional reference database.

**6.** Process and system diagnostic method according to Claim 5,
**characterised in that** a quantitatively assessed dependence establishment or confirmation of the characteristic values which represent independent parameters is carried out on the basis of the provisional reference database for each characteristic value of a data set.

**7.** Process and system diagnostic method according to Claim 5 or 6,
**characterised in that** the characteristic values of the provisional reference database are represented by means of a mathematical calculation method, in particular a multiple regression or an expansion or a generalisation thereof, such as fuzzy logic or neural networks, as a function of influential, independent parameters, whereby provisional reference value functions with an initially low degree of determination are initially obtained for each characteristic value.

**8.** Process and system diagnostic method according to Claim 7,
**characterised in that** conspicuous deviations are detected through an iterative procedure when determining the reference value functions, and the corresponding data sets are removed until convergence is achieved.

**9.** Process and system diagnostic method according to Claim 8,
**characterised in that**, given additionally available data sets, the degree of determination of the reference value functions is also continuously increased by tightening the steady-state criterion until convergence with actually established measured values is achieved.

**10.** Process and system diagnostic method according to any one of Claims 3 to 9,
**characterised in that** the parameter range supplemented by mathematical calculation methods for reference values accepted as valid is expanded by expanding the total database through actual measured values for operating conditions which are relevant in practice.

**11.** Process and system diagnostic method according to Claim 10,
**characterised in that** the reference value-operating characteristic value comparison is carried out for each actual operating characteristic value without correcting systematic measurement uncertainties and, with the associated parameter-edulcorated and statistically assessed reference value, delivers an absolute deviation together with a statistical fluctuation range.

**12.** Process and system diagnostic method according to Claim 11,
**characterised in that** the deviation of the operating characteristic value from the reference value, together with the statistical fluctuation range, is output as a non-dimensional, parameter-edulcorated, statistically assessed deviation from disturbance-free operation as an assessment number, in particular displayed and/or printed out and/or stored.

**13.** Process and system diagnostic method according to Claim 12,
**characterised in that** a status protocol of the hierarchically arranged characteristic values which contains the operating value, the reference value and the associated assessment number for each characteristic value is created through the results of the comparison.

**14.** Process and system diagnostic method according to Claim 12 or 13,
<u>**characterised in**</u> **that** assessment numbers above a predetermined limit are given an identification which serves to perform a quantitative search for the causes or effects of process and system disturbances within the hierarchical structure in the sense of a founded diagnosis.

**Revendications**

**1.** Procédé de diagnostic de processus et de systèmes qui consiste à déterminer continuellement le mode de fonctionnement actuel d'un processus technologique à l'aide de paramètres de fonctionnement et à comparer ce mode de fonctionnement à des valeurs de référence à l'aide de comparaisons "paramètres de fonctionnement/valeurs de référence", <u>**caractérisé en ce que,**</u> pour des modes de fonctionnement stationnaires, des paramètres de fonctionnement déterminés à partir de valeurs de fonctionnement simplement mesurées entrent dans une base de données globale continuellement complétée et qu'une base de données de référence est sélectionnée automatiquement comma sous-quantité de la base de données globale selon des critères de choix donnés et que des valeurs de référence prises dans la base de données de référence servant à la comparaison avec les paramètres de fonctionnement actuels.

**2.** Procédé de diagnostic de processus et de systèmes suivant la revendication 1, <u>**caractérisé en ce que**</u> les paramètres de fonctionnement ainsi que les résultats des comparaisons "paramètre de fonctionnement/valeur de référence" sont enregistrés et/ou affichés.

**3.** Procédé de diagnostic de processus et de systèmes suivant la revendication 1 ou 2, <u>**caractérisé en ce qu'**</u>un enregistrement provisoire servant d'étape préliminaire à un enregistrement de paramètres, constitué de valeurs moyennes et des écarts types correspondants, est créé à partir de valeurs de mesure instantanées, dans un intervalle de temps donné, la grandeur pondérée de quelques écarts types réunis étant une mesure de l'état stationnaire, et que, un critère donné de l'état stationnaire étant observé, l'enregistrement est définitivement intégré dans la base de données globale comma étant un enregistrement de paramètres représentant le mode de fonctionnement actuel, alors que l'enregistrement provisoire est rejeté si le critère de l'état stationnaire n'est pas observé.

**4.** Procédé de diagnostic de processus et de systèmes suivant la revendication 3, <u>**caractérisé en ce**</u>

<u>**que**</u> les paramètres des différents enregistrements sont classés selon des critères de dépendance, en particulier, par ordre hiérarchique.

**5.** Procédé de diagnostic de processus et de systèmes suivant Tune des revendications 1 à 4, <u>**caractérisé en ce qu'**</u>on exclut de la base de données globale, par variable bolique et/ou délimitation d'intervalle, les états qui représentent des modes de fonctionnement non souhaités ou sans importance et que les enregistrements représentant les modes de fonctionnement restants forment une base de données de référence provisoire.

**6.** Procédé de diagnostic de processus et de systèmes suivant la revendication 5, <u>**caractérisé en ce que**</u> sur la base de la base de données de référence provisoire, une détermination de dépendance évaluée quantitativement est effectuée pour chaque paramètre ou qu'une confirmation de dépendance est effectué pour ceux des paramètres qui représentent des paramètres indépendants.

**7.** Procédé de diagnostic de processus et de systèmes suivant les revendications 5 ou 6, <u>**caractérisé en ce que**</u> les paramètres de la base de données de référence provisoire sont représentés comma fonction de paramètres influents et indépendants au moyen d'un processus de calcul mathématique, en particulier dune régression multiple ou d'une extension ou généralisation de celle-ci, telle que la logique floue ou les réseaux neuronaux, ce qui donna pour chaque paramètre des fonctions de valeurs de référence, qui sont d'abord provisoires avec un degré de détermination qui est d'abord faible.

**8.** Procédé de diagnostic de processus et de systèmes suivant la revendication 7, <u>**caractérisé en ce que,**</u> par démarche itérative lors de la détermination des fonctions de valeur de référence, des écarts singuliers sont reconnus et les enregistrements correspondants éliminés jusqu'à ce qu'il y ait convergence.

**9.** Procédé de diagnostic de processus et de systèmes suivant la revendication 8, <u>**caractérisé en ce que,**</u> pour des enregistrements supplémentaires disponibles, le degré de détermination des fonctions de référence est continuellement augmenté, également par accentuation du critère de l'état stationnaire jusqu'à convergence avec les valeurs de mesure actuellement déterminées.

**10.** Procédé de diagnostic de processus et de systèmes suivant une des revendications 3 à 9, <u>**caractérisé en ce que**</u> la plage des paramètres complétée par des procédés de calcul mathématique est élargie pour des fonctions de référence intégrées comma étant valables, en élargissant la base de données globale de valeurs de mesure actuelles pour des modes de fonctionnement représentatifs de la pratique.

11. Procédé de diagnostic de processus et de systèmes suivant la revendication 10, **caractérisé en ce que** la comparaison entre "valeur de référence/paramètre de fonctionnement" est effectuée pour chaque paramètre actuel sans correction des incertitudes de mesure systématiques et qu'elle donna, avec la valeur de référence correspondante, à paramètre dépouillé et évaluée statistiquement, un écart absolu et une amplitude statistique.

12. Procédé de diagnostic de processus et de systèmes suivant la revendication 11, **caractérisé en ce que** l'écart entre le paramètre de fonctionnement et la valeur de référence est édité avec l'amplitude statistique comma écart adimensionnel, à paramètre dépouillé, statistiquement évalué d'un fonctionnement sans défaut, sous forma de chiffre de pondération, en particulier affiché et/ou imprimé et/ou mémorisé.

13. Procédé de diagnostic de processus et de systèmes selon la revendication 12, **caractérisé en ce qu'**un rapport d'état des valeurs caractéristiques, classées par ordre hiérarchique et contenant pour chaque valeur caractéristique la fiabilité, la valeur de référence et le chiffre de pondération correspondant, est établi au moyen des résultats de la comparaison.

14. Procédé de diagnostic de processus et de systèmes selon la revendication 12 ou 13, **caractérisé en ce que** les chiffres de pondération reçoivent, au-delà dune limite prédéterminée, une caractérisation servant à la recherche quantitative des causes, à savoir des effets, de pannes de processus et de systèmes, au sens d'un diagnostic fondé, à l'intérieur dune structure hiérarchique.

Definition von Kennwerten auf drei
hierarchischen Verdichtungsebenen

Blockkennwerte
- Nettowirkungsgrad
- Bruttowirkungsgrad

Teilbereichskennwerte
- Kesselwirkungsgrad
- Kreislaufwirkungsgrad
- Eigenbedarfsanteil

Einzelkennwerte
z.Z. 66 Kennwerte

Verfolgen der
Störungsursache

Auswirkungen der Störungen
auf die Prozeßgüte

**Fig. 1**

| Kraftwerks-block |

| Belastbare Betriebsmessungen |

| ggf. Anfahrvorgänge | → | Anfahrprotokoll |

| Beharrungskennzahl |

| 30 min Beharrung |

| (Ist-) Kennwerte für einen parameterabh. Zustand | $\Sigma$ → | Objektive Betriebserfahrung |

| Ist ↔ Soll Vergleich / Bewertung | ← | Parameterabhängige (Soll-) Kennwerte |

| Betriebsprotokoll |

online ←——— | ———→ offline

**Fig. 2**

Kriterium Beharrungskennzahl ☜

Objektive Betriebserfahrung

Kriterien:
- Fallunterscheidung
- Intervallschachtelung
- Verschärfte Stationarität ☜

| Signifikanztest für Koeffizienten | Überprüfung der Parameter-abhängigkeit jedes Kennwertes |

Ausschluß nicht repräsentativer ( = gestörter ) Betriebszustände ☜

| Erkennung und Überprüfung auffälliger Abweichungen der Kennwerte | Referenzdatenbasis ( = störungsfreier Betrieb ) |
| | Regressionsanalyse |

Interpolationsfunktionen Bestimmtheitsmaß B

Parameterabh. ( Soll- )Kennwertfunktionen } störungsfreier
Standardabweichungen                              } Betrieb

**Fig. 3**

**Fig. 4**

13

Fig. 5

Fig. 6

Fig. 7

Fig. 8

```
          GUETEUEBERWACHUNG - KRAFTWERK HEYDEN IV (Version 2.0)
          MESSPROTOKOLL VOM 22.07.97 AB 12.19 Uhr (Dauer 30 min)
                    SOLLWERTBASIS sollwert.005


       Prozessparameter

    1.  Heizwert (Kohle)               [kJ/kg]:    28890,00
    2.  Kuehlwassertemperatur vor Kond.   [C]:        24,96
    3.  Aussentemperatur                  [C]:        21,69
    4.  Lastfaktor                       [--]:         ,9663

  NR   BEZEICHNUNG                               IST       SOLL    BZ  BEM

    5.  Feuerungswaermeleistung          [MW]:  2072,30   2150,00   -6  XXX
    6.  Bruttoleistung                   [MW]:   839,74    853,76   -8  XXX
    7.  Block-MG (Netto)                  [%]:    38,53     38,84    2
    8.  Block-WG (Brutto)                 [%]:    40,72     41,09   -9  XXX
    9.  Kessel-WG                         [%]:    94,50     94,43    1
   10.  Kreislauf-WG                      [%]:    42,92     43,33
   11.  Eigenbedartsanteil                [%]:     5,37      5,28

        Kessel-, Luft-, Rauchgaswegueberwachung

   12.  Luftverhaeltnis vor Katalysator   [--]:    1,159     1,160   -1
   13.  O2 vor Katalysator 1          [Vol.-%]:    2,82      2,87    -1
   14.  O2 vor Katalysator II         [Vol.-%]:    2,94      2,92     0
   15.  NOox vor Katalysator 1  (6%-O2)[mg/Nm3]:  668,70    798,14   -4
   16.  NOx vor Katalysator II  (6%-O2)[mg/Nm3]:  657,74    783,46   -4
   17.  NOx vor Kamin (6%-O2)         [mg/Nm3]:   193,74    196,00   -2
   18.  NH3-Mehrverbrauch              [kg/h]:      1,97      ,00     2

   21.  Schwefelemissionsqrad             [%]:    12,63     11,81    1
   22.  SO2-Gehalt vor REA            [mg/Nm3]:  1892,89   1963,93   -1
   23.  SO2-Gehalt hinter REA I       [mg/Nm3]:   242,03    223,72   1
   24.  SO2-Gehalt hinter REA II      [mg/Nm3]:   239,22    230,70   0
   25.  RG-Temperatur vor LUVO I          [C]:   382,32    382,39   0
   26.  RG-Temperatur vor LUVO II         [C]:   384,28    380,10   3
   27.  RG-Temperatur hinter LUVO I       [C]:   130,62    132,29   -2
   28.  RG-Temperatur hinter LUVO II      [C]:   129,97    131,79   -2
   29.  LUVO I Mittlere Blechtemperatur   [C]:    86,93     86,00   3
   30.  LUVO II Mittlere Blechtemperatur  [C]:    85,37     85,00   1
   31.  O2-Anstieg ueber LUVO I       [Vol.-%]:    1,80      1,58    4
   32.  O2-Anstieg ueber LUVO II      [Vol.-%]:    1,56      1,46    2
   33.  Leckage Prim. => Sek. LUVO 1   [kg/s]:     1,68     29,85   -3
   34.  Leckage Prim. => Sek. LUVO II  [kg/s]:    58,89     64,02   0
   35.  Druck vor Schalldaempfer       [mbar]:    46,51     46,00   0
   36.  Druckverlust DENOX 1           [mbar]:     7,40      7,59   -1
   37.  Druckverlust DENOX II          [mbar]:     7,34      7,27   0
   38.  Druckverlust LUVO 1 (Rauchgas) [mbar]:    18,70     12,86   4
   39.  Druckverlust LUVO II (Rauchgas)[mbar]:    20,91     16,98   2
```

Fig. 9a

| | | | | | |
|---|---|---|---|---|---|
| 40. | Druckverlust GAWA I (Rohgas) | (mbar): | 8,12 | 7,58 | 0 |
| 41. | Druckverlust GAWA 1 (Reingas) | (mbar): | 12,95 | 17,04 | 1 |
| 42. | Druckverlust GAWA II (Rohgas) | (mbar): | 8,33 | 9,04 | -1 |
| 43. | Druckverlust GAWA II (Reingas) | (mbar): | 18,18 | 15,40 | 4 |
| 44. | Druckverlust Waescher I | (mbar): | 17,07 | 17,09 | 0 |
| 45. | Druckverlust Waescher II | (mbar): | 16,46 | 16,25 | 0 |

Kreislauf / Turbine

| | | | | | | |
|---|---|---|---|---|---|---|
| 46. | Speisewassermassenstrom | (kg/s): | 719,49 | 713,41 | 5 | |
| 47. | Frischdampfmassenstrom | (kg/s): | 715,95 | 708,79 | 6 | XXX |
| 48. | Frischdampftemperatur | (C): | 536,08 | 537,14 | -4 | |
| 49. | Frischdampfdruck | (bar): | 201,43 | 199,64 | 6 | XXX |
| 50. | Rel. HD-Einspritzwassermstroni | (%): | 5,64 | 5,55 | 0 | |
| 51. | ZUE-Massenstrom <Eintritt) | (kg/s): | 642,17 | 641,74 | 0 | |
| 52. | ZUE-Austrittstemperatur | (C): | 535,56 | 536,03 | -4 | |
| 53. | ZUE-Einspritzwassermassenstrom | (kg/s): | 16,67 | 15,41 | 1 | |

| | | | | | | |
|---|---|---|---|---|---|---|
| 54. | Druckverlust Kessel HD | (bar): | 62,29 | 61,66 | 0 | |
| 55. | Druckverlust Kessel ZUE | (bar): | 2,44 | 2,88 | -12 | XXX |

| | | | | | | |
|---|---|---|---|---|---|---|
| 56. | Endtemperatur ND-Vorwaermer A1 | (C): | 59,07 | 59,14 | 0 | |
| 57. | Endtemperatur ND-Vorwaermer A2 | (C): | 93,80 | 96,02 | -11 | XXX |
| 58. | Endtemperatur ND-Vorwaermer A3 | (C): | 136,74 | 137,86 | -8 | XXX |
| 59. | Endtemperatur ND-Vorwaermer A4 | (C): | 169,47 | 169,80 | -3 | |
| 60. | Aufwaermung ND-Vorwaermer (gesamt) | (K): | 129,92 | 130,74 | -3 | |
| 61. | Aufwaermung Speisewasserbehaelter | (K): | 33,56 | 33,25 | 3 | |
| 62. | Aufwaeriiiung HD-Vorwaermer Str. 1 | (K): | 59,57 | 56,97 | 16 | XXX |
| 63. | Aufwaermung HD-Vorwaermer Str. 2 | (K): | 62,38 | 59,59 | 19 | XXX |

| | | | | | |
|---|---|---|---|---|---|
| 64. | k-Wert Kondensator MAG 20 | (kW/(m2K)): | 3,24 | 3,35 | -2 |
| 65. | k-Wert Kondensator MAG 10 | (kW/(m2K)): | 2,49 | 2,68 | -2 |
| 66. | Kondensatordruck MAG 20 | (mbar): | 64,67 | 65,15 | -1 |
| 67. | Kondensatordruck MAG 10 | (mbar): | 100,89 | 99,57 | 2 |
| 68. | Inertgasanteil (modifiziert) MAG 20 (%): | | 5,58 | 6,12 | -1 |
| 69. | Inertgasanteil (modifiziert) MAG 10 (%): | | 4,53 | 6,74 | -2 |
| 70. | Kuehlwassermassenstrom vor Kond | (kg/s): | 14214,63 | 14374,40 | 0 |
| 71. | Zusatzkuehlwassermassenstrom | (kg/s): | 5792,40 | 4367,00 | 1 |

| | | | | | | |
|---|---|---|---|---|---|---|
| 72. | Isentroper WG HD-Turbine | (%): | 90,41 | 90,52 | -1 | |
| 73. | Isentroper WG MD-Turbine | (%): | 88,44 | 92,10 | -26 | XXX |

Eigenbedarf

| | | | | | |
|---|---|---|---|---|---|
| 74. | Gesamteigenbedarf | (MW): | 45,08 | 45,19 | 0 |
| 75. | Speisewasser / Kondensat | (MW): | 3,24 | 3,24 | 0 |
| 76. | Rauchgasreinigung | (MW): | 20,33 | 20,33 | 0 |
| 77. | Kuehlwasser | (MW): | 5,85 | 5,97 | -1 |
| 78. | Brennstoff / Luft | (MW): | 11,73 | 11,70 | 0 |
| 79. | Sonstige Leistungen | (MW): | 3,93 | 3,90 | 0 |

Fig. 9b